# EUROPÄISCHE PATENTSCHRIFT

(11) **EP 1 272 545 B1**
(45) Veröffentlichungstag und Bekanntmachung des Hinweises auf die Patenterteilung: **08.09.2004**
(21) Anmeldenummer: 01931539.9
(22) Anmeldetag: 19.03.2001
(51) Int. Cl.: C08G 69/46, C08F 6/00

(54) **POLYAMIDZUSAMMENSETZUNG UND VERFAHREN ZU IHRER HERSTELLUNG**
POLYAMIDE COMPOSITION AND METHOD FOR PRODUCING THE SAME
COMPOSITION DE POLYAMIDE ET SON PROCEDE DE PRODUCTION

(30) Priorität: 30.03.2000 DE 10015862
(43) Veröffentlichungstag der Anmeldung: 08.01.2003
(73) Patentinhaber: Bayer Aktiengesellschaft, 51368 Leverkusen (DE)
(72) Erfinder: MORHENN, Heinrich, 50829 Köln (DE); GÖBBELS, Dieter, 47906 Kempen (DE); SCHERER, Cliff, 41366 Schwalmtal (DE); WEYRICH, Frank, 42781 Haan (DE); TRIEBENECK, Konrad, 51469 Bergisch Gladbach (DE); KOHLGRÜBER, Klemens, 51515 Kürten (DE)
(86) Internationale Anmeldenummer: PCT/EP2001/003116
(87) Internationale Veröffentlichungsnummer: WO 2001/074925

(56) Entgegenhaltungen:
- DE-A- 4 324 616
- DE-A- 19 505 150
- US-A- 4 537 954
- US-A- 4 578 455

## Beschreibung

Die Erfindung betrifft ein Verfahren zur Herstellung eines von flüchtigen Bestandteilen befreiten Polyamid oder Copolyamid durch Entfernen der flüchtigen Bestandteile, insbesondere der Monomere und Dimere in wenigstens zwei Stufen aus der Schmelze des Polymeren, unter Verwendung eines insbesondere gasförmigen Schleppmittels. Die Erfindung betrifft ferner Polyamidzusammensetzungen aus Polyamid 6 oder ein Copolyamid mit erniedrigtem Gehalt an flüchtigen Bestandteilen, sowie Formmassen aus den genannten Polyamiden und Formkörpern und Fasern, die aus diesen Formmassen hergestellt werden.

Bei der Herstellung von Polyamid 6 (PA 6) und bei Copolyamiden mit PA 6 als Hauptbestandteil ist der Umsatz in der Reaktion durch ein chemisches Gleichgewicht limitiert. Dadurch enthält das die Reaktion verlassende Gemisch bei 270°C noch Restmonomere (ε-Caprolactam) und Oligomere (zyklische Dimere, zyklische Trimere, zyklische Tetramere etc. - die im Folgenden Dimer, Trimer oder Tetramer genannt werden) mit einem Gesamtgehalt von ca. 10 %.

Die Besonderheit des Polyamids gegenüber anderen Polymeren, wie Polycarbonat, SAN-Harz oder Polystyrol, besteht darin, dass die flüchtigen Komponenten (insbesondere die Oligomere) im Reaktionsgemisch bei der Herstellung einen extrem niedrigen Dampfdruck aufweisen (z.B. beträgt der Dampfdruck des Dimeren von ε-Caprolactam bei 300°C nur 100 mbar). Für die Verarbeitung des Produktes (z.B. im Spritzgussverfahren) ist es notwendig, neben den Monomeren auch die Dimeren bis auf einen sehr niedrigen Restgehalt zu reduzieren, weil sonst unerwünschte Effekte wie Ablagerungen im Spritzgusswerkzeug oder anderen Anlagenteilen bei der Verarbeitung und eine starke Belagbildung im Falle dunkel eingefärbter konditionierter Polyamidformteile auftreten.

Die Reduzierung von Monomeren und Dimeren durch einen Verdampfungsprozess erfordert aufgrund des niedrigen Dampfdrucks des Dimeren eine hohe Bearbeitungstemperatur (typischerweise 250 bis 320°C) und die Eindampfung bei einem sehr niedrigen Druck. Die hohe Temperatur ist darüber hinaus auch zur Aufrechterhaltung der Fließ- und Pumpfähigkeit des Produktes notwendig. Die hohe Temperatur in einem Verdampfungsprozess ist in der Regel schädlich für die Qualität des Produktes (das Produkt neigt zur Vergilbung und es treten Kettenabbrüche im Polymeren auf). Daher sind kurze Verweilzeiten bei der Reaktionsführung gefordert.

Bei einem Eindampfprozess ist zunächst ein guter Wärmeübergang vom Heizmedium auf das Produkt notwendig, um die zum Verdampfen der flüchtigen Bestandteile notwendige Verdampfungsenthalpie bei möglichst geringer Beheizungstemperatur aufzubringen. Am Ende eines Eindampfprozesses, wenn nur noch geringe Mengen Monomere oder Oligomere vorhanden sind, ist der Stoffübergang durch Diffusion für das Entgasungsergebnis entscheidend. Dieses erfordert ein hohes treibendes Potential für den Diffusionsprozess, wie ein geringer Partialdruck der Komponenten in der Gasphase, große Stoffaustauschflächen und möglichst lange Verweilzeiten unter Vakuum.

Zur Reduzierung der flüchtigen Komponenten im Polyamid 6 und Copolyamiden mit PA 6 als Hauptbestandteil sind zwei grundsätzlich unterschiedliche Verfahrensweisen bekannt.

Bei den Extraktionsverfahren, die in den Offenlegungsschriften DE 43 24 616 A1 und DE 19 505 150 A1 beschrieben sind, wird das hochviskose Reaktionsgemisch nach der Reaktion abgekühlt und granuliert. Die im Granulat enthaltenen Monomere und Oligomere werden anschließend in einer ca. 24 Stunden dauernden Gegenstromextraktion mit Wasser oder entstehenden Caprolactam/Wasser-Mischung oder reinem Caprolactam extrahiert. Das extrahierte Granulat wird in einem ebenfalls 24 Stunden dauerenden Trocknungsschritt getrocknet. Die wässrige Lösung aus der Extraktion, die nun die Monomere und Oligomere enthält, wird in einer Eindampfstufe aufkonzentriert. Die dabei entstehende sogenannte Dicklauge wird der Reaktion, das verdampfte Wasser der Extraktion zugeführt. Bei diesem Verfahren können sehr niedrige Gehalte an flüchtigen Bestandteilen im Granulat erzielt werden (Gehalt an ε-Caprolactam ≤0,35 %, Dimer ≤0,15 %, Trimer ≤0,25 % und Tetramer ≤0,3 %). Darüber hinaus ist die thermische Belastung vergleichsweise gering.

Der große Nachteil dieses Verfahrens ist die sehr lange Verweilzeit in der Extraktion und Trocknung und die damit verbundene sehr große Apparatedimension im Falle hoher Produktdurchsätze. Dies bedeutet einen hohen Investitionsaufwand für die Durchführung eines solchen Verfahrens. Ein weiterer Nachteil ist ein hoher Energiebedarf für die Trocknung und Eindampfung des Extraktionswassers.

Weiter bekannt sind Eindampfverfahren insbesondere maschinelle Verfahren. Für die Eindampfung von Polymeren werden häufig Maschinen, wie Extruder (in Ein- oder Mehrwellenextruder), oder Dünnschichtverdampfer eingesetzt (vgl. DE 3 310 676.A1, DE 4 328 013.A1 oder US 3 630 689). Die Nachteile beim Einsatz maschineller Verfahren bestehen in den hohen Investitionsaufwendungen für Ausdampfextruder oder Dünnschichtverdampfer, dem Verschleiß von rotierenden Teilen und den Schwierigkeiten im Umgang mit den benötigten sehr schweren Maschinenteilen. Insbesondere bei einem hohen Produktdurchsatz tritt darüber hinaus eine starke mechanische Produktbeanspruchung auf, die zu einer sehr hohen Produkttemperatur und einer daraus resultierenden Produktschädigung führt. Außerdem genügen diese Verfahren in der Regel nicht den hohen Ansprüchen von technischen Polyamidrohstoffen mit den für die Verarbeitung und den Eigenschaften des Endproduktes geforderten niedrigen Oligomerengehalt, insbesondere dem Gehalt an Dimer.

Ferner bekannt sind apparative Eindampfverfahren ohne bewegte mechanische Teile. In den Offenlegungsschriften DE 3 409 066 und EP 200 368 A1 wird ein zwei- bzw. dreistufiges Verfahren unter Verwendung von zwei bzw. drei Rohrbündelwärmetauschern mit unmittelbar auf die Rohrbündel folgenden Abscheidern beschrieben, die bei verschiedenen Drücken unterhalb des Umgebungsdrucks (dies betrifft die 2. und 3. Stufe beim dreistufigen Verfahren oder beide Stufen beim zweistufigen Verfahren) betrieben werden. Die Verfahren werden zur Entfernung von flüchtigen Bestandteilen aus Styrolpolymeren und Styrolcopolymeren, bzw. kauschukmodifizierten Styrolpolymeren eingesetzt. Vor der letzten Eindampfstufe werden bei diesem Verfahren flüssige Schleppmittel, wie Wasser oder Alkohole, verwendet. Flüssige Schleppmittel sind ungünstig, da bei Kontakt des Schleppmittels mit der heißen Polymerschmelze durch die sehr hohen Temperaturunterschiede zwischen Schmelze und Schleppmittel eine schlagartige Verdampfung auftritt, die mit Filmsieden verbunden ist. Dies führt zu Pulsationen im Reaktionsraum und vermindert eine gute Dispergierung des Schleppmittels. Beim Einsatz von organischen Schleppmitteln bei Polyamid 6 und Copolyamiden ist zudem ein erhöhter Sicherheitsaufwand notwendig, da die Explosionsgefahr beachtet werden muss, die hohe Sicherheitsaufwendungen bedingt.

Eine weitere Möglichkeit, Polymerlösungen mit einfachen Apparaten zu isolieren, ist ein Verfahren unter Verwendung einer Kombination aus einem Schlangenrohr- und Strangverdampfer wie dies in der Schrift WO 99/04023 beschrieben ist. Dieses Verfahren eignet sich nicht für Polyamide, da die Verweilzeit im Strangverdampfer nicht für die hier geforderten Restgehalte ausreicht, insbesondere, da beim Strangverdampfer kein Schleppmitteleinsatz möglich ist, ohne dass die Stränge abreißen.

Der Erfindung liegt die Aufgabe zugrunde, die Gehalte an Monomeren (ε-Caprolactam) und zyklischem Dimer im Polyamid 6 mit einem Eindampfverfahren bis auf einen Monomergehalt von höchstens 0,7 %, insbesondere höchstens 0,35 % und bevorzugt höchstens 0,2 %, Monomer bzw. auf ein Dimergehalt von höchstens 0,3 %, insbesondere höchstens 0,2 % und bevorzugt 0,15 %, (gemessen nach dem unten beschriebenen HPLC-Analyseverfahren) zu reduzieren. Dabei soll eine einfache Methode zum Einsatz kommen, die mit kostengünstigen Vorrichtungen realisiert werden kann. Die Besonderheit gegenüber den bekannten Eindampfverfahren besteht darin, dass die Monomere und Dimere einerseits einen sehr niedrigen Dampfdruck besitzen, andererseits der sehr kleine Diffusionskoeffizient des Dimeren (in der Größenordnung von 10⁻¹¹m²/s) den Stoffaustausch stark erschwert.

Die Aufgabe wird erfindungsgemäß gelöst durch ein zweistufiges Eindampfverfahren der Polymerschmelze unter Verwendung eines Rohrbündelwärmetauschers und eines Schlaufenverdampfers bzw. zweier nacheinander geschalteter Rohrbündelwärmetauscher. Eine Besonderheit des erfindungsgemäßen Verfahrens ist der Einsatz eines leichtflüchtigen, gasförmigen Schleppmittels (vorzugsweise Wasserdampf oder Stickstoff), das zwischen den beiden Apparaten mit einem statischen Mischer unter erhöhtem Druck im Polymer dispergiert wird.

Gegenstand der Erfindung ist ein Verfahren zur Herstellung von an flüchtigen Bestandteilen befreitem Polyamid oder Copolyamid durch Entfernen der flüchtigen Bestandteile, insbesondere der Monomere und Dimere, in wenigstens zwei Stufen aus einem Polyamid 6 oder einem Copolyamid des Polyamid 6, dadurch gekennzeichnet, dass in der ersten Stufe die Schmelze des Polymeren, insbesondere bei einer Temperatur von 200 bis 300°C in einen Rohrbündelwärmetauscher eingeleitet wird und die Monomere bzw. Dimere bei einer Temperatur des Rohrbündelwärmetauschers von 250 bis 300°C verdampft werden und die flüchtigen Bestandteile in einem nachgeschalteten ersten Abscheider bei einem Druck von höchstens 300 mbar (höchstens 30 000 Pa), bevorzugt von 10 bis 300 mbar (10 bis 300 hPa), besonders bevorzugt von 10 bis 30 mbar (10 bis 30 hPa), bei einer Temperatur des Abscheiders von 250 bis 300°C entfernt werden,
dass in das erhaltene entgaste Polymer ein bevorzugt gasförmiges Schleppmittel, insbesondere Stickstoff, ein Edelgas, Kohlendioxid oder Wasserdampf in einem Molverhältnis von Schleppmittel zu Polymer von mindestens 1:1, insbesondere von 1:1 bis 10:1, besonders bevorzugt von 1:1 bis 4:1 eingeleitet wird,
dass das Schleppmittel anschließend in der Polymerschmelze mit Hilfe eines statischen Mischerelementes, insbesondere mit einem mindestens zweistufigen Mischer, dispergiert wird,
dass in einer zweiten Stufe die erhaltene Mischung in einen Rohrbündelwärmetauscher oder einen Schlaufenverdampfer oder eine Kombination aus Rohrbündelwärmetauscher und Schlaufenverdampfer, jeweils mit nachgeschaltetem Abscheider ausgerüstet, eingeleitet wird und weitere flüchtige Bestandteile, insbesondere Dimere und restliche Monomere, bei einer Temperatur von 250 bis 350°C verdampft werden, dass die flüchtigen Bestandteile im zweiten Abscheider bei einem Druck von höchstens 10 mbar (10 hPa), bevorzugt von höchstens 8 mbar (8 hPa), besonders bevorzugt von höchstens 2 mbar (2 hPa) und einer Temperatur im zweiten Abscheider von 250 bis 300°C entfernt werden und die entgaste Polymerschmelze aus dem Abscheider abgeleitet wird.

Der statische Mischer ist vorteilhaft mindestens zweistufig derart ausgeführt, dass als erste Stufe ein Mischer mit größerem Durchmesser zur Vordispergierung verwendet wird. In dieser ersten Stufe werden die zunächst großen Gasblasen des Schleppmittels zerteilt, bevor sie in einer zweiten Mischerstufe, die im Durchmesser kleiner ausgeführt ist, unter hoher Scher- und Dehnspannung fein dispergiert wird. Große Gasblasen können in einem Mischer mit kleinerem Mischer nur unzureichend dispergiert werden, da große Blasen in Mischern mit kleinem Durchmesser nach der Zerteilung wieder agglomerieren. Daher ist auch ein hoher Druck am Eintritt in die Mischstrecke notwendig, um kleine Gasvolumina, d.h. kleine Blasen zu realisieren.

Das die Reaktion verlassene Polyamid 6-Monomer-Oligomer-Gemisch mit einem Anteil von Monomeren von ca. 10 Gew.-% und einem Dimerenanteil von 0,4 bis 1 Gew.-%, wird ein Rohrbündelwärmetauscher wie beschrieben, der mit einer Heiztemperatur oberhalb des Glaspunktes des Polymeren beheizt wird, vorzugsweise von oben zugeführt. Der Rohrbündelwärmetauscher ist vorzugsweise vertikal aufgebaut und sitzt dann unmittelbar auf einem Dampfabscheider. Der Druck im Abscheider liegt unterhalb des Umgebungsdruckes, vorzugsweise bei 10 bis 300 mbar.

Alle Prozentangaben betreffend Zusammensetzungen sind im nachfolgenden als Gewichtsprozent zu verstehen soweit nicht besonders erwähnt.

Das Verfahren wird vorteilhaft in der Weise ausgeführt, dass die Verdampfung in der ersten Stufe bereits in den Rohren beginnt. Dies erhöht den Wärmeübergang gegenüber dem einphasigen Zustand und reduziert die Verweilzeit aufgrund von Schaumbildung. In dem Abscheider der ersten Stufe wird das Polymer und die gasförmigen Komponenten voneinander getrennt. Das Polymer wird vorzugsweise mit einer Zahnradpumpe oder einer Austragschnecke aus dem Abscheider ausgetragen.

Insbesondere die der Aufgabe zugrundeliegende Forderung nach einer Reduzierung des Dimerengehalts auf einen Wert von <0,2 % erfordert in der zweiten Entgasungsstufe zur Überwindung des diffusen Stoffübergangs, große Stoffaustauschflächen, einen sehr geringen Partialdruck der zu entfernenden Komponenten und einer langen Verweilzeit unter Vakuum. Vorteilhaft wird dies durch die Anwendung eines Hochvakuums in einer zweiten Entgasungsstufe (höchstens 2 mbar) und durch das Einmischen geringer Mengen an Schleppmitteln in einem statischen Mischer erreicht. Durch das Schleppmittel wird der Partialdruck der Dimere und Momomere in der Gasphase reduziert. Das Polymer wird aufgeschäumt, woraus eine große Stoffaustauschfläche und große Diffusionswege resultieren. Der entstehende Polymerschaum wird in der zweiten Entgasungsstufe auf Schlaufen, die sich im unter vermindertem Druck stehenden zweiten Abscheider befinden, verteilt. Das Polymer läuft durch die Schwerkraft an den Schlaufen herunter. Dadurch erhält man eine lange Verweilzeit des Produktes im Vakuum bei gleichzeitig nur geringer Berührung von Metallflächen. Durch Variation der Länge und Anzahl der Schlaufen kann die Verweilzeit des Polymeren in großen Bereichen variiert werden. Anstelle des Schlaufenverdampfers kann in der zweiten Stufe auch ein weiterer Rohrbündelwärmetauscher eingesetzt werden. Vorteilhaft wird die Geometrie der Rohre des Rohrbündelwärmetauschers so gewählt, dass der Druckverlust für eine gute Vakuumzugänglichkeit möglichst gering ist. Die Vorteile des Rohrbündelwärmetauschers gegenüber dem Schlaufenverdampfer sind vor allem seine leichtere Verfügbarkeit und die Möglichkeit einer weiteren Energiezufuhr. Ebenso ist eine Kombination aus beiden Apparaten möglich. Bei diesem kombinierten Apparat werden die Schlaufen am unteren Ende eines jeden Rohres des Rohrbündelwärmetauschers befestigt.

Die Dispergierung des Schleppmittels zu einem sehr feinen Schaum wird vorteilhaft mit einem mindestens zweistufigen Mischer, in dem starke Scher- und Dehnströmungen auftreten, erreicht. Dies bewirkt gleichzeitig einen erhöhten Druckverlust und damit einen erhöhten Druck (typischerweise >20 bar) an der Einspeisestelle des Schleppmittels, der vorteilhaft für die Dispergierung ist.

Für den Austrag des entgasten Polyamids aus der zweiten Entgasungsstufe kann eine Zahnradpumpe oder eine Austragsschnecke verwendet werden. Durch einen der zweiten Stufe nachgeschalteten statischen oder dynamischen Mischer oder einer Schnecke kann eine direkte Verarbeitung des Polyamids zu speziellen Compounds (z.B. faserverstärktes Polyamid) oder eine Einfärbung des Polyamides erfolgen.

In einer bevorzugten Variante des Verfahrens wird daher die aus dem zweiten Abscheider austretende Schmelze direkt im Anschluss compoundiert bzw. mit Zuschlagstoffen oder Additiven versehen.

Vorteilhaft ist es, die Austragschnecke der zweiten Entgasungsstufe in einer bevorzugten Verfahrensvariante als Compoundierer auszuführen. Damit wird insbesondere möglich, das aus der zweiten Stufe erhaltene, entgaste Polymer direkt im Anschluß an die Ableitung und gegebenenfalls Compoundierung zu Granulat zu verarbeiten.

Besonders bevorzugt ist eine Variante des Verfahrens, bei der als Vakuumerzeuger für die Entfernung der flüchtigen Bestandteile eine im Kreislauf geschaltete Kombination aus Flüssigkeitsringpumpe, Einspritzkondensator, Tauchbehälter und Kreislaufpumpe verwendet wird, wobei als Kondensationsmittel vorzugsweise flüssiges Caprolactam verwendet wird.

Insbesondere bevorzugt wird dem Einspritzkondensator ein Dampfstrahler vorgeschaltet, der mit Caprolactam als Treibmittel betrieben wird.

Eine besonders bevorzugte weitere Variante des Verfahrens besteht darin, dass dem Einspritzkondensator eine in Reihe geschaltete Kombination aus einem ersten Dampfstrahler, einem weiteren Einspritzkondensator und einem zweiten Dampfstrahler vorgeschaltet ist, wobei das Kondensat im Sumpf des weiteren Einspritzkondensators dem Tauchbehälter zugeführt wird und wobei als Treibmittel für die Dampfstrahler, vorzugsweise Caprolactam verwendet wird.

Mit den besonderen Formen der Vakuumerzeugung wird eine wasserfreie Entfernung von flüchtigen Bestandteilen ermöglicht, die das Gesamtverfahren noch wirtschaftlicher macht gegenüber bekannten Trennverfahren.

Außerdem wird die gezielte Kondensation und Ausschleusung hochsiedender Bestandteile (Dimere etc.) ermöglicht.

Dem Verfahren zugänglich sind alle grundsätzlich bekannten Typen von Polyamid 6 und Copolyamiden des Polyamid 6 mit einer relativen Lösungsviskosität von ηrel = 2,4 bis 4,5, bevorzugt ηrel = 2,5 bis 3,5, besonders bevorzugt ηrel = 2,6 bis 3,2.

Dem Verfahren zugänglich sind auch Polyamide aus den Monomerenklassen: Lactame oder Aminocarbonsäuren oder Diaminen sowie Dicarbonsäuren oder Mischungen daraus.

Bevorzugt sind Polyamide auf Basis von:
ε-Caprolactam und Mischungen aus ε-Caprolactam und Aminoundecansäure und den Diaminen 1,6-Hexamethylendiamin, Isophorondiamin sowie den Dicarbonsäuren Adipinsäure, Isophthalsäure und Mischungen daraus mit einem Anteil von ε-Caprolactam von >75 Gew.-% im fertigen Polymer.
Besonders bevorzugt sind solche Polyamide auf Basis von:
ε-Caprolactam resp. 1,6-Aminocapronsäure.
Optional einsetzbare Copolyamide sind solche auf Basis von:
Mischungen aus ε-Caprolactam und anderen Lactamen mit 7 bis 15 Kohlenstoffatomen und α,ω-Diamine mit 4 bis 20 Kohlenstoffatomen, die sich aus Alkylen oder Arylen ableiten sowie den α,ω-Dicarbonsäuren mit 4 bis 20 Kohlenstoffatomen, die sich aus Alkylen oder Arylen ableiten und Mischungen daraus mit einem Anteil von ε-Caprolactam von >50 Gew.-% im fertigen Polymer.

Die relative Lösungsviskosität im Sinne der Erfindung wird gemessen als relative Viskosität (Verhältnis der Durchlaufzeiten in einem Ubbelohde-Viskosimeter) einer Kresollösung aus 1 g PA-Probe, die auf 100 ml Lösung aufgefüllt wird.

Gebräuchlich ist auch die Viskositätszahl in Schwefelsäure (1 % PA in 96 %iger H₂SO₄) nach ISO 307.

Durch die bei dem erfindungsgemäßen Verfahren realisierbare Inline-Compoundierung entfällt der bei räumlich und zeitlich getrennten Entlactamisierungs- und Compoundierschritten notwendige Aufschmelzvorgang des Polymeren. Dies reduziert die Größe der Compoundiermaschinen und die Temperaturbelastung des Produktes.

Bevorzugte Anwendungsbereiche für die aus dem Verfahren erhältlichen Polyamide sind
1. Die Direktverwendung als Formmasse zur Herstellung von Formkörpern
2. Formmasse zur Herstellung von Compounds in einem separaten Verfahrensschritt durch Zugabe von Zuschlagstoffen und Additiven in einer Schmelzecompoundierung mittels Zweischneckenextrusion, welche erst dann als Formmasse zur Herstellung von Formkörpern dient.

Das erfindungsgemäße Verfahren ist, wie beschrieben, besonders geeignet für Polyamid 6 und Copolymere mit Polyamid 6 als Hauptbestandteil. Das Verfahren kann aber auch grundsätzlich für andere Thermoplaste verwendet werden, insbesondere dann, wenn extrem niedrige Monomer- und Lösungsmittelgehalte in Polymeren gefordert sind.

Im Folgenden wird das Verfahren anhand von Beispielen und Figuren näher erläutert. Es zeigen:
- Fig. 1: Ein Fließschema für eine zweistufige Anlage, bestehend aus einem Rohrbündelwärmetauscher mit nachgeschaltetem Abscheider inklusive Austragsorgan und einem Schlaufenverdampfer mit Austragsorgan. Zwischen den beiden Stufen befindet sich statischer Mischer zur Schleppmitteldispergierung.

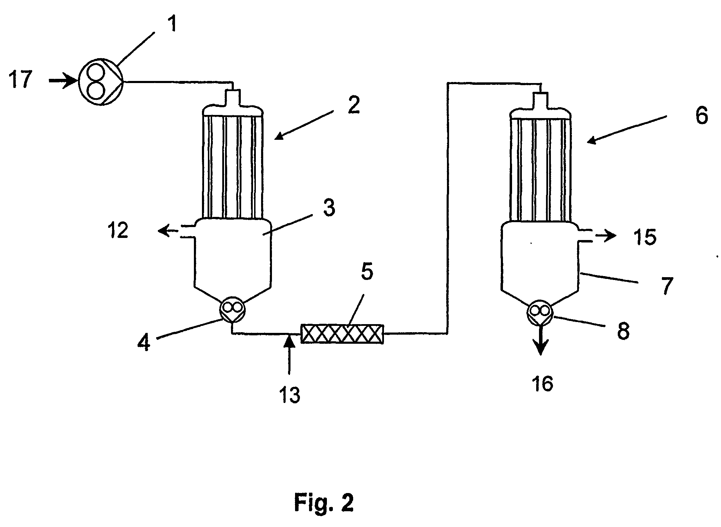

- Fig. 2: Ein Fließschema für eine zweistufige Anlage, bestehend aus zwei Rohrbündelwärmetauschern mit nachgeschalteten Abscheidern inklusive Austragsorgan sowie einem statischen Mischer zwischen den beiden Stufen zur Schleppmitteldispergierung.
- Fig. 3: Eine schematische Darstellung eines Vakuumerzeugers zum Anschluss an den Auslass 12 in der Anlage gemäß Fig. 1.
- Fig. 4: Eine schematische Darstellung eines mehrstufigen Vakuumerzeugers zum Anschluss an die Leitung 14 in der Anlage nach Fig. 2.

### Beispiele

### Beispiel 1

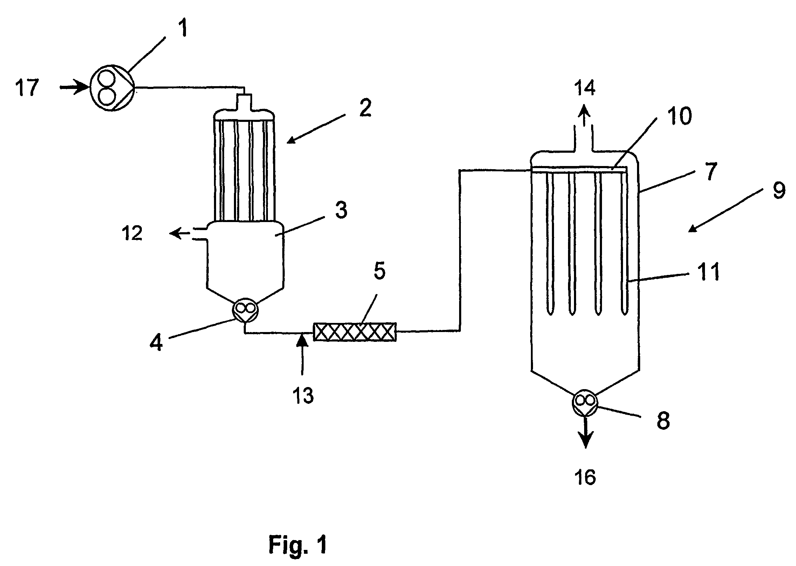

Das Verfahren wurde entsprechend dem Verfahrensschema in Fig. 1 mit Polyamid 6 (Typ Durethan B26, Hersteller Bayer AG mit einer rel. Viskosität ηrel = ca. 2,6), das nach der Herstellung noch ca. 8 Gew.-% Lactam und ca. 0,5 Gew.-% zyklisches Dimer enthält, erprobt. Das Reaktionsgemisch wurde bei einer Temperatur von 270°C in die erste Stufe der Anlage gefördert. Die erste Stufe der Anlage besteht aus einem Rohrbündelwärmetauscher 2 mit 4 Rohren, die einen Innendurchmesser von 10 mm und eine Länge von 1 m besitzen. Das Rohrbündel 2 wurde mit einer Temperatur von 270°C beheizt. Die Verdampfung der flüchtigen Komponenten beginnt bereits innerhalb der Rohre, wobei ein Polymerschaum entsteht. Die Trennung der gasförmigen Komponenten von der hochviskosen flüssigen Phase findet teilweise schon in den Rohren statt. Das Rohrbündel 2 sitzt oberhalb eines handelsüblichen ersten Abscheiders 3, in dem die endgültige Trennung von Gas- und Polymerphase erfolgt. Die Gasphase wird über Kopf durch den Auslass 12 abgezogen, die Polymerphase wird mit einer großmäuligen Zahnradpumpe 4 ausgetragen. Der Druck im Abscheider 3 wurde von 20 bis 50 mbar variiert (siehe Tabelle 1 und 2).

Das Schleppmittel wird kurz vor dem statischen Mischer 5 der Polymerschmelze zugegeben. Die Mischelemente des Mischers 5 sind vom Typ SMX der Fa. Sulzer (Schweiz). Als erste Mischerstufe wird ein Mischer mit 16 mm Durchmesser und einer Länge von 300 mm, als zweite Stufe ein Mischer mit einem Durchmesser von 10 mm und einer Länge von 120 mm verwendet.

In dem statischen Mischer 5 wird das Polymer durch das Schleppmittel 13 aufgeschäumt. Als Schleppmittel wurde Stickstoff und Wasserdampf verwendet. Der Druck an der Einspeisestelle des Schleppmittels lag bei etwa 40 bar. Der Durchsatz des Schleppmittels wurde bei den verschiedenen Versuchen zwischen 0 und 240 g/h (Stickstoff) bzw. 0 bis 120 g/h (Wasserdampf) variiert. Der Durchsatz des Reaktionsgemisches betrug 5 und 8 kg/h.

Der den statischen Mischer 5 verlassende Schaum wird in einem Schlaufenverdampfer 9 über ein Verteilerrohr 10 auf 4 Schlaufen 11 verteilt. Die Schlaufen 11 waren 1,5 m lang und wurden aus 1 mm dickem Draht gefertigt. Die Schlaufen 11 hängen in der Entgasungskammer 7, die mit einer Vakuumpumpe über die Leitung 14 auf einen Druck von ca. 0,7 bis 2,5 mbar evakuiert wurde (siehe Tabelle 1 und 2). Der Polymerschaum läuft durch die Schwerkraft an den Schlaufen 11 herunter. Dabei platzen die im Polymer dispergierten Gasblasen auf, die flüchtigen Komponenten und das Schleppmittel werden getrennt. Die Beheizung des Schlaufenverdampfers 9 und des statischen Mischers 5 erfolgte mit Öl bei einer Temperatur von 300°C. Mit einer weiteren Zahnradpumpe 8 wird das entgaste Polymer 16 ausgetragen, für die Analyse in einem Wasserbad abgekühlt und granuliert.

Die Tabellen 1 und 2 zeigen die Ergebnisse der Messungen. Der Restgehalt an Lactam und zyklischem Dimer wurde mit der HPLC-Methode bestimmt. Durch das Verfahren wurde ein Lactamgehalt zwischen 0,13 und 0,5 Gew.-% erreicht. Die Dimerengehalte betrugen zwischen 0,1 und 0,25 Gew.-%.

Aus den Messwerten der Tabellen 1 und 2 wird der Einfluss des Schleppmittelanteils auf den Restgehalt an flüchtigen Bestandteilen deutlich. Mit schon geringen Schleppmittelanteilen von 0,5 Gew.-% wird das Entgasungsergebnis (im Vergleich zur Fahrweise ohne Schleppmittel) deutlich verbessert (z.B. geht der Lactamgehalt von 0,5 auf 0,2 Gew.-% herunter). Mit zunehmendem Schleppmittelgehalt werden im untersuchten Bereich die Restgehalte geringfügig schlechter. Die Ergebnisse bei der Verwendung von Stickstoff als Schleppmittel sind etwas besser als von Wasserdampf. Weitere Versuche mit Polyamid 6 mit höherer Ausgangsviskosität (Typ Durethan B29, Hersteller Bayer AG mit einer rel. Viskosität ηrel ca. 2,94) und Copolyamiden (CPA) ergaben bei gleicher Fahrweise ähnliche Ergebnisse. Es wurde ein Lactamgehalt von bis zu 0,1 Gew.-% und Dimerengehalte bis zu 0,11 Gew.-% erreicht.

### Beispiel 2

Alternativ wurde als zweite Entgasungsstufe ein Rohrbündelwärmetauscher 6 mit 4 Rohren untersucht. Die Rohre hatten einen Innendurchmesser von 23 mm und eine Länge von 1 m. Diese Untersuchungen wurden unter den ansonsten gleichen Betriebsbedingungen betreffend Durchsatz, Temperatur, Druck in den Abscheidern, wie die Versuche mit dem oben dargestellten Schlaufenverdampfer (siehe Tabelle 1) durchgeführt. Für Polyamid (Typ Durethan B29, Viskosität, ηrel = 2,94) wurde unter Verwendung von Stickstoff als Schleppmittel ein Lactamgehalt von bis 0,17 Gew.-% und ein Dimergehalt von bis 0,25 Gew.-% erzielt.

In der Tabelle 3 sind die Ergebnisse bezüglich der Belagbildung und Restoligomerenwerte (HPLC-Methode) zusammengefasst. Die in Form von weißlichen Oberflächenmustern auftretende Belagbildung wurde optisch ermittelt, an mehrtätig ISO1110-konditionierten Rechteckplatten, hergestellt aus schwarz eingefärbten, 30 % glasfasergefüllten Mischungen auf Basis des zu prüfenden Polyamidharzes. Erfindungsgemäß hergestelltes Polyamid (Beispiel 1 und 2 in Tabelle 3) neigt zu deutlich verringerter Belagbildung im Vergleich zu Materialien nach einstufiger Vakuumentlactamisierung (siehe Beispiel 5 in Tabelle 3) oder Mehrschneckenextrusion (Beispiel 6 in Tabelle 3). Im Vergleich zu herkömmlichen, mit Wasser extrahiertem Material (siehe Beispiele 3 und 4 in Tabelle 3) ist somit mit Hilfe der erfindungsgemäßen Technik eine praktisch gleichwertige und akzeptable Belagbildungstendenz zu erzielen.

### Beschreibung der HPLC-Analysenmethode:

1 g einer Polymerprobe wird exakt eingewogen und in 20 ml Ameisensäure gelöst. Dann wird mit 250 ml Methanol gefällt. Nach mehreren Stunden wird über ein Faltenfilter in einen gewogenen 250 ml Rundkolben abfiltriert. Die Probe wird jetzt auf ca. 20 ml eingedampft, abgekühlt und eingeengt. Danach wird auf genau 20 g Lösung aufgefüllt. Bei Bedarf wird über Blaubandfilter filtriert (1 g Probe gelöst in 20 g Methanol). Eine 25 µl-Spritze wird mit ca. 20 µl Lösung aufgezogen und in eine HPLC-Anlage mit Acetonitril/Wasser als Eluentgemisch mit Gradientfahrweise eingespritzt. Die Oligomere werden bei 210 nm UV-spektroskopisch detektiert.

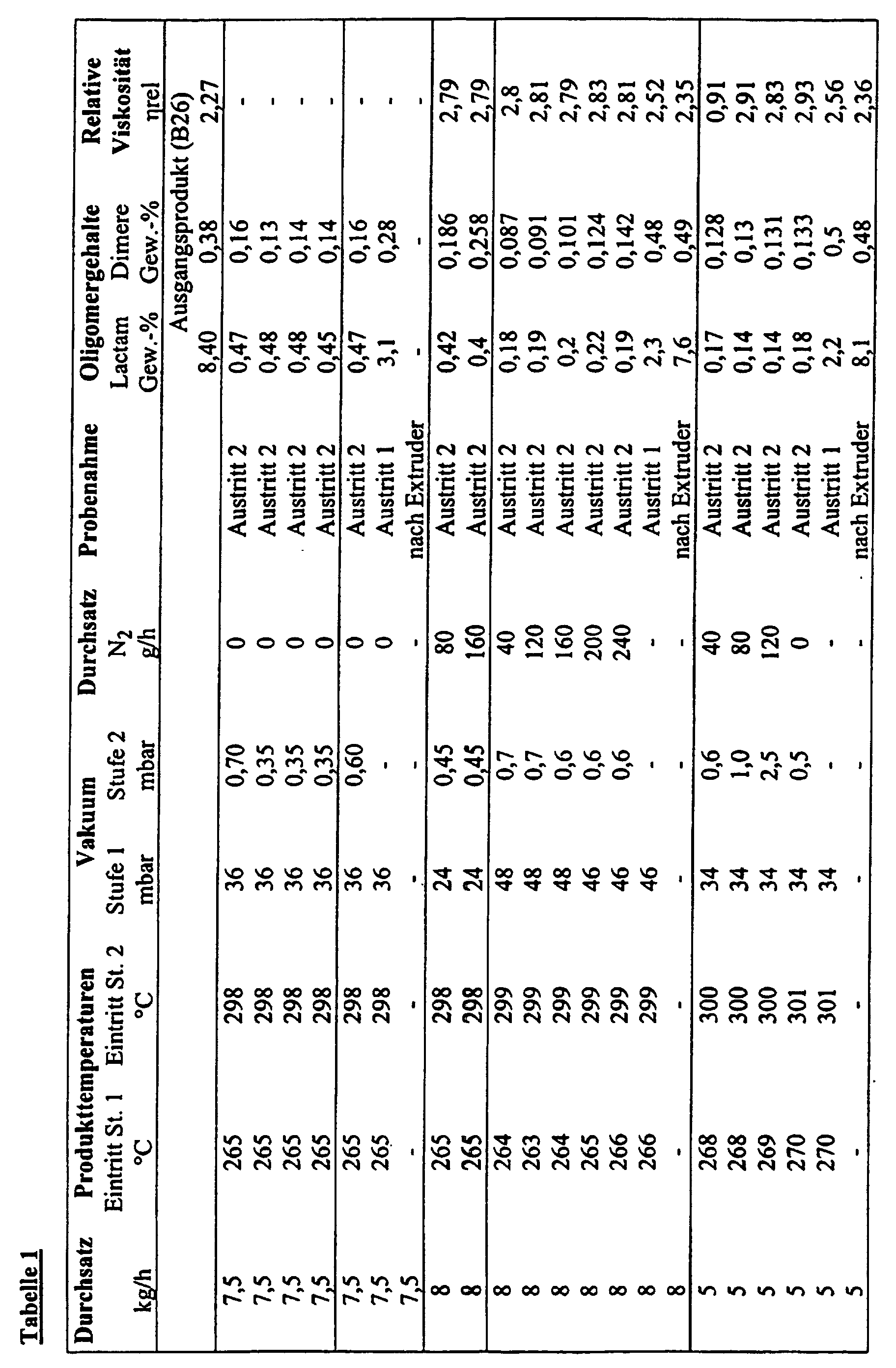

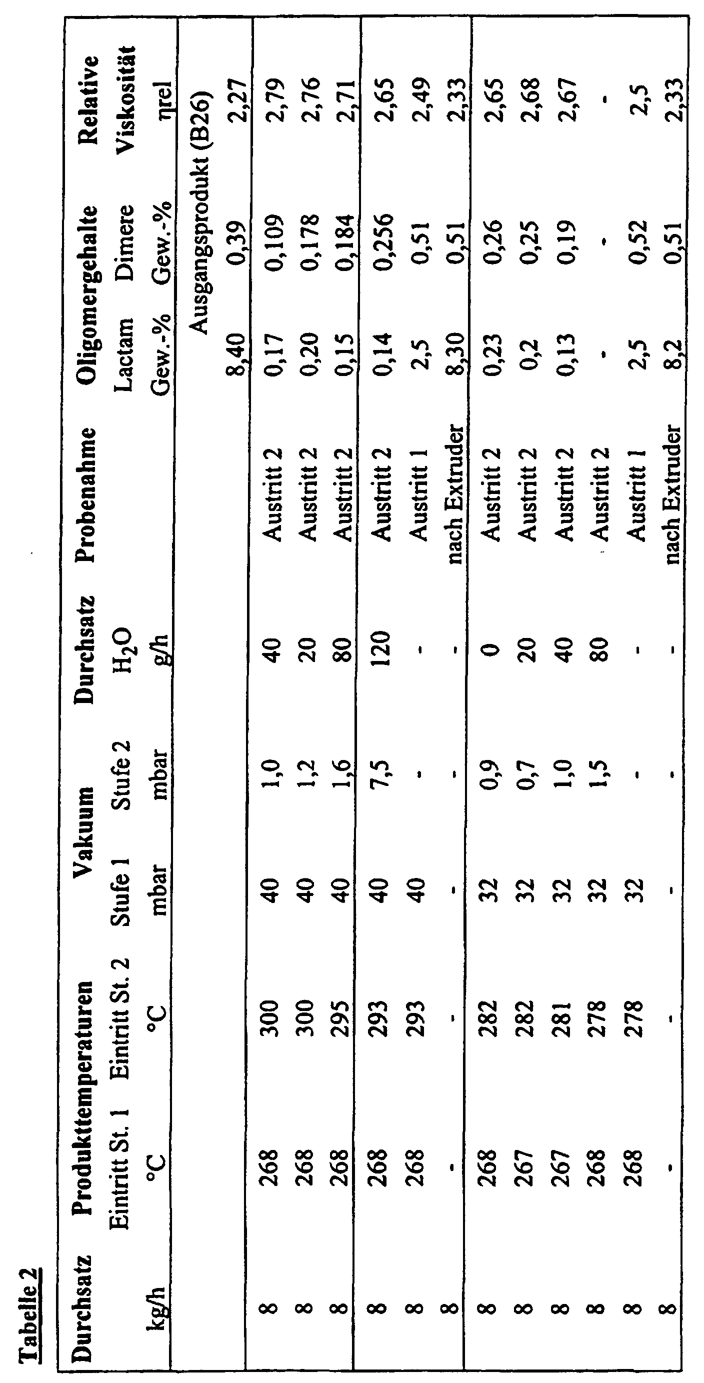

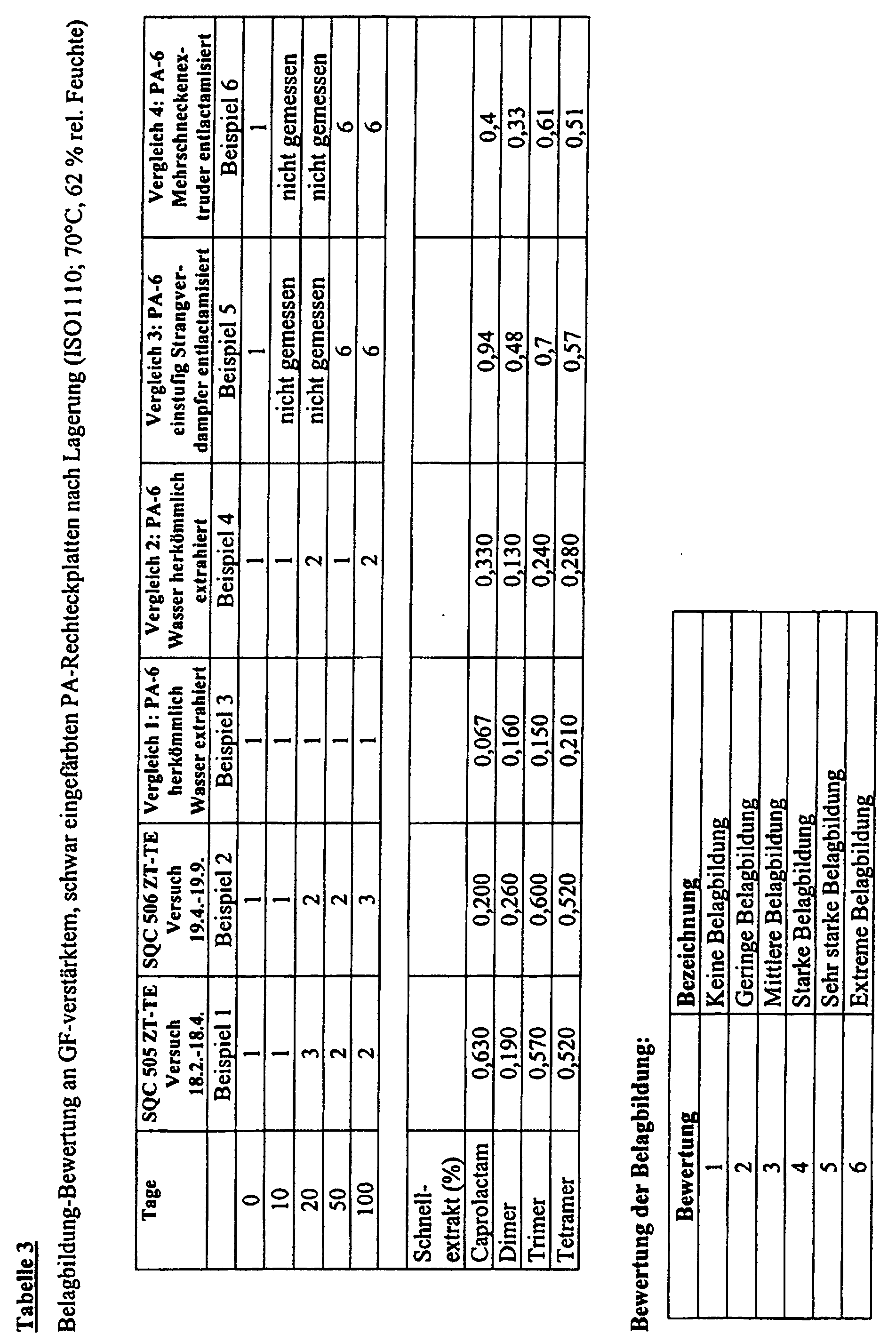

### Beispiel 3

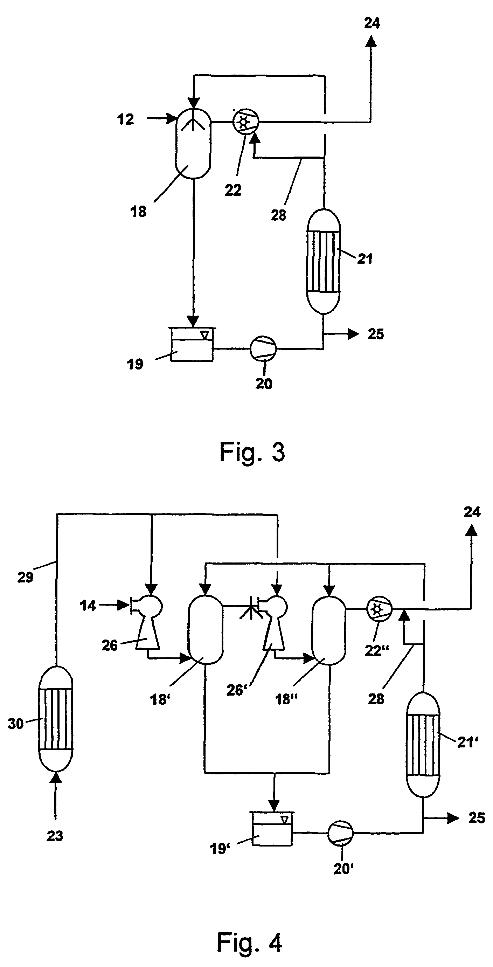

Die Vakuumerzeugung und die Kondensation der verdampften Monomere und Oligomere ist in der nachfolgenden beschriebenen Variante des Verfahrens dadurch bewirkt, dass die Vakuumaggregate und Kondensatoren ausschließlich mit Caprolactam (ohne weitere Hilfsstoffe wie z.B. Wasser) betrieben werden. In der ersten Stufe (Fig. 3) werden die Brüden des Auslass 12 aus dem Rohrbündelverdampfer 2 (siehe Fig. 1) im Einspritzkondensator 18 an ca. 90°C warmen Caprolactam kondensiert. Das aus dem Einspritzkondensator 18 ablaufende Caprolactam wird im Kreislauf dem Einspritzkondensator 18 wieder zugeführt. Der Kreislauf besteht aus: Einspritzkondensator 18; Tauchbehälter 19 mit barometrischem Verschluss, Kreislaufpumpe 20, und Wärmeübertrager 21 zur Einstellung der Kreislauftemperatur. Ein Teilstrom 25 mit dem verdampften und kondensierten Monomeren wird kontinuierlich aus dem Kreislauf ausgeschleust. Das ausgeschleuste Monomer wird wieder als Rohstoff in der Polykondensation eingesetzt. Zum Aufbau des Vakuums und zum Absaugen der inerten Bestandteile wird dem Einspritzkondensator 18 eine Flüssigkeitsring-Vakuumpumpe 22 nachgeschaltet. Die für die Funktion der Vakuumpumpe 22 erforderliche Flüssigkeitsbeauftragung erfolgt mit flüssigem Caprolactam. Dazu wird ein kleiner Teilstrom 28 aus dem oben beschriebenem Caprolactam-Kreislauf entnommen und der Vakuumpumpe 22 zugeführt. Anschließend wird das überschüssige Caprolactam wieder in den Kreislauf zurückgeführt. Die nicht kondensierten und inerten Bestandteile werden von der Vakuumpumpe 22 abgesaugt und einer Abgasreinigung 24 zugeführt. Mit dieser Form der Vakuumerzeugung wird ein kontaminationsfreies Recycling des Monomeren ermöglicht.

### Beispiel 4

In der zweistufigen Anordnung zur Vakuumerzeugung nach Fig. 4 werden die Brüden des Anlasses 14 aus dem Schlaufenverdampfer 9 und der Caprolactam-Treibdampf der hintereinander geschalteten Dampfstrahlpumpen 26, 26' durch Einspritzen von ca. 90°C warmen Caprolactam in den Einspritzkondensatoren 18' bzw. 18" kondensiert. Das aus den Einspritzkondensatoren 18' bzw. 18" ablaufende Caprolactam wird zusammengeführt und im Kreislauf zu den Einspritzkondensatoren 18' bzw. 18" zurückgeführt. Der Kreislauf besteht aus: Einspritzkondensator 18' bzw. Einspritzkondensator 18"; Tauchbehälter 19' mit barometrischem Verschluß; Kreislaufpumpe 20' und Wärmeübertrager 21' zur Einstellung der Kreislauftemperatur. Aus dem Kreislauf wird kontinuierlich ein Teilstrom 25 des Caprolactams in der Größe der Treibmittelmenge für die Dampfstrahler 26, 26' und der Menge der kondensierten Dimere ausgeschleust. Das ausgeschleuste Caprolactam wird wieder als Rohstoff in der Polykondensation eingesetzt. Zur Erzeugung des Vordrucks ist dem zweiten Einspritzkondensator 18" eine Flüssigkeitsring-Vakuumpumpe 22' nachgeschaltet.

Der erforderliche Caprolactam-Treibdampf 29 mit einer Temperatur von ca. 300°C für die Dampfstrahler 26, 26' wird im Verdampfer 30 erzeugt. Die für die Funktion der Vakuumpumpe 22' erforderliche Flüssigkeitsbeaufschlagung erfolgt mit flüssigem Caprolactam. Dazu wird ein kleiner Teilstrom aus dem oben beschriebenem Caprolactam-Kreislauf entnommen und der Vakuumpumpe 22' zugeführt. Anschließend wird das überschüssige Caprolactam wieder in den Kreislauf zurückgeführt. Die nicht kondensierten Bestandteile aus der Polymerschmelze und das inerte Schleppgas (bei Verwendung von Stickstoff als Schleppmittel) werden von der Vakuumpumpe 22' abgesaugt und einer Abgasreinigung 24 zugeführt.

## Patentansprüche

1. Verfahren zur Herstellung eines von flüchtigen Bestandteilen befreiten Polyamid oder Copolyamid durch Entfernen der flüchtigen Bestandteile, insbesondere der Monomere und Dimere, in wenigstens zwei Stufen aus einem Polyamid 6 oder einem Copolyamid des Polyamid 6 in der Schmelze, **dadurch gekennzeichnet, dass** in der ersten Stufe die Schmelze des Polymeren, insbesondere bei einer Temperatur von 200 bis 300°C, in einen Rohrbündelwärmetauscher (2) eingeleitet wird und die Monomere bzw. Dimere bei einer Temperatur des Rohrbündelwärmetauschers (2) von 250 bis 300°C verdampft werden und die flüchtigen Bestandteile in einem nachgeschaltetem ersten Abscheider (3) bei einem Druck von höchstens 300 mbar (300 hPa), bevorzugt von 10 bis 300 mbar (10 bis 300 hPa), besonders bevorzugt von 10 bis 30 mbar (10 bis 30 hPa), bei einer Temperatur im ersten Abscheider (3) von 250 bis 300°C entfernt werden,
dass in das erhaltene entgaste Polymer ein bevorzugt gasförmiges Schleppmittel (13), insbesondere Stickstoff, ein Edelgas, Kohlendioxid oder Wasserdampf in einem Molverhältnis von Schleppmittel zu Polymer von mindestens 1:1, insbesondere von 1:1 bis 10:1, besonders bevorzugt von 1:1 bis 4:1, eingeleitet wird,
dass das Schleppmittel anschließend in der Polymerschmelze mit Hilfe eines statischen Mischerelementes (5), insbesondere mit einem mindestens zweistufigen Mischer (5), dispergiert wird,
dass in einer zweiten Stufe die erhaltene Mischung in einen Rohrbündelwärmetauscher (6) oder einen Schlaufenverdampfer (9) oder eine Kombination aus Rohrbündelwärmetauscher (6) und Schlaufenverdampfer (9), jeweils mit nachgeschaltetem Abscheider (7), eingeleitet wird und weitere flüchtige Bestandteile, insbesondere Dimere und restliche Monomere, bei einer Temperatur von 250 bis 350°C verdampft werden,
dass die flüchtigen Bestandteile im zweiten Abscheider (7) bei einem Druck von höchstens 10 mbar (10 hPa), bevorzugt von höchstens 8 mbar (8 hPa), besonders bevorzugt von höchstens 2 mbar (2 hPa), und einer Temperatur im Abscheider (7) von 250 bis 300°C entfernt werden und die entgaste Polymerschmelze aus dem Abscheider (7) abgeleitet wird.

2. Verfahren nach Anspruch 1, **dadurch gekennzeichnet, dass** die aus dem zweiten Abscheider (7) austretende Schmelze direkt im Anschluss compoundiert bzw. mit Zuschlagstoffen und Additiven versehen wird.

3. Verfahren gemäß einem der Ansprüche 1 oder 2, **dadurch gekennzeichnet, dass** das erhaltene entgaste Polymer direkt im Anschluss an die Ableitung aus der zweiten Stufe und gegebenenfalls Compoundierung zu Granulat verarbeitet wird.

4. Verfahren gemäß einem der Ansprüche 1 bis 3, **dadurch gekennzeichnet, dass** als Polymer ein Polyamid 6 oder ein Copolyamid das Polyamid 6 mit einer relativen Viskosität ηrel von 2,4 bis 4,6, bevorzugt ηrel 2,5 bis 3,5, besonders bevorzugt ηrel 2,6 bis 3,2 verwendet wird.

5. Verfahren nach einem der Ansprüche 1 bis 4, **dadurch gekennzeichnet, dass** als Vakuumerzeuger für die Entfernung der flüchtigen Bestandteile eine im Kreislauf geschaltete Kombination aus Flüssigkeitsringpumpe (22, 22'), Einspritzkondensator (18, 18"), Tauchbehälter (19) und Kreislaufpumpe (20, 20') verwendet wird, wobei als Kondensationsmittel vorzugsweise flüssiges Caprolactam verwendet.

6. Verfahren nach Anspruch 5, **dadurch gekennzeichnet**, dem Einspritzkondensator (18) ein Dampfstrahler (26') vorgeschaltet ist, der mit Caprolactam als Treibmittel betrieben wird.

7. Verfahren nach Anspruch 5, **dadurch gekennzeichnet, dass** dem Einspritzkondensator (18") ein in Reihe geschaltete Kombination aus einem ersten Dampfstrahler (26), einem Einspritzkondensator (18') und einem zweiten Dampfstrahler (26') vorgeschaltet ist, wobei das Kondensat im Sumpf des weiteren Einspritzkondensators (18') dem Tauchgehälter (19) zugeführt wird, und wobei als Treibmittel für die Dampfstrahler (26, 26'), vorzugsweise Caprolactan verwendet wird.

8. Verfahren nach einem der Ansprüch 1 bis 7, dadurch gekennezeichnet, dass das Polymid 6 oder das Copolyamid des Polyamid 6 einen Gehalt an Monomeren (ε-Caprolactam) von höchstens 0,7 Gew.-%, insbesondere von höchstens 0,3 Gew.-%, besonders bevorzugt von höchstens 0,2 Gew.-%, mit einem Gehalt an Dimeren von höchstens 0,3 Gew.-%, insbesondere von höchstens 0,2 Gew.-%, bevorzugt von höchstens 0,15 Gew.-%, enthält.

## Claims

1. Process for producing a polyamide or copolyamide freed from volatile constituents by removing the volatile constituents, in particular the monomers and dimers, in at least two stages, from a polyamide 6 or a copolyamide of the polyamide 6 in the melt, **characterised in that**, in the first stage, the polymer melt is introduced into a shell-and-tube heat exchanger (2), in particular at a temperature of 200 to 300 °C, the monomers and dimers are evaporated at a temperature of the shell-and-tube heat exchanger (2) of 250 to 300 °C, and the volatile constituents are removed in a first separator (3) connected downstream at a pressure of at most 300 mbar (300 hPa), preferably from 10 to 300 mbar (10 to 300 hPa), particularly preferably from 10 to 30 mbar (10 to 30 hPa), at a temperature in the first separator (3) of 250 to 300 °C, **in that** a preferably gaseous entrainer (13), in particular nitrogen, an inert gas, carbon dioxide or water vapour, is introduced into the degassed polymer obtained in a molar ratio of entrainer to polymer of at least 1:1, in particular of 1:1 to 10:1, particularly preferably of 1:1 to 4:1, **in that** the entrainer is subsequently dispersed in the polymer melt using a static mixing element (5), in particular an at least two-stage mixer (5), **in that**, in a second stage, the mixture obtained is introduced into a shell-and-tube heat exchanger (6) or a loop-type evaporator (9) or a combination of shell-and-tube heat exchanger (6) and loop-type evaporator (9), in each case with separator (7) connected downstream, and further volatile constituents, in particular dimers and residual monomers, are evaporated at a temperature of 250 to 350 °C, **in that** the volatile constituents are removed in the second separator (7) at a pressure of at most 10 mbar (10 hPa), preferably at most 8 mbar (8 hPa), particularly preferably at most 2 mbar (2 hPa), and a temperature in the separator (7) of 250 to 300 °C, and the degassed polymer melt is removed from the separator (7).

2. Process according to claim 1, **characterised in that** the melt issuing from the second separator (7) is immediately compounded or provided with additives.

3. Process according to either claim 1 or claim 2, **characterised in that** the degassed polymer obtained is processed to granules immediately after removal from the second stage and optionally compounding.

4. Process according to any one of claims 1 to 3, **characterised in that** a polyamide 6 or a copolyamide of the polyamide 6 with a relative viscosity ηrel of 2.4 to 4.6, preferably ηrel 2.5 to 3.5, particularly preferably ηrel 2.6 to 3.2, is used as the polymer.

5. Process according to any one of claims 1 to 4, **characterised in that** a combination, connected to the circuit, of a liquid-ring pump (22, 22'), an injection condenser (18, 18"), a dip tank (19) and a circulating pump (20, 20') is used as a vacuum generator for removing the volatile components, liquid caprolactam preferably being used as a condensing agent.

6. Process according to claim 5, **characterised in that** a steam ejector (26'), which is operated with caprolactam as a blowing agent, is connected upstream of the injection condenser (18).

7. Process according to claim 5, **characterised in that** a combination, connected in series, of a first steam ejector (26), an injection condenser (18') and a second steam ejector (26') is connected upstream of the injection condenser (18"), the condensate in the sump of the additional injection condenser (18') being supplied to the dip tank (19), and caprolactam preferably being used as a blowing agent for the steam ejectors (26, 26').

8. Process according to any one of claims 1 to 7, **characterised in that** the polamide 6 or the copolyamide of the polyamide 6 has a monomer (ε-caprolactam) content of at most 0.7 % by weight, in particular at most 0.3 % by weight, particularly preferably at most 0.2 % by weight, with a dimer content of at most 0.3 % by weight, in particular at most 0.2 % by weight, preferably at most 0.15 % by weight.

## Revendications

1. Procédé de fabrication de polyamide ou copolyamide débarrassé des composants volatils par élimination en au moins deux étages dans la masse fondue des composants volatils, en particulier des monomères et dimères, hors d'un polyamide 6 ou d'un copolyamide du polyamide 6, **caractérisé en ce que** au premier étage, la matière fondue du polymère est introduite dans un échangeur de chaleur à faisceau tubulaire (2), en particulier à une température de 200 à 300°C, et les monomères et dimères sont évaporés à une température de l'échangeur de chaleur à faisceau tubulaires (2) de 250 à 300°C et les composants volatils sont éliminés dans un premier séparateur (3) branché en aval sous une pression de maximum 300 mbar (300 hPa), de préférence de 10 à 300 mbar (10 à 300 hPa), de manière particulièrement préférée de 10 à 30 mbar (10 à 30 hPa), pour une température du premier séparateur (3) de 250 à 300°C,
**en ce qu'**un agent d'entraînement (13) de préférence gazeux, en particulier de l'azote, un gaz noble, du dioxyde de carbone ou de la vapeur d'eau, est introduit dans le polymère dégazé obtenu dans un rapport molaire de l'agent d'entraînement sur le polymère d'au moins 1:1, en particulier de 1:1 à 10:1, de manière particulièrement préférée de 1:1 à 4:1,
**en ce que** l'agent d'entraînement est ensuite dispersé dans la masse fondue de polymère à l'aide d'un élément mélangeur (5) statique, en particulier d'un mélangeur à au moins deux étages (5),
**en ce que**, dans un deuxième étage, le mélange obtenu est introduit dans un échangeur de chaleur à faisceau tubulaire (6) ou un évaporateur à boucles (9) ou une combinaison d'échangeur de chaleur à faisceau tubulaire (6) et d'évaporateur à boucles (9), chacun équipé d'un séparateur (7) branché en aval, et d'autres composants volatils, en particulier des dimères et les monomères restants, sont évaporés à une température de 250 à 350°C,
**en ce que** les composants volatils sont éliminés dans le deuxième séparateur (7) à une pression de maximum 10 mbar (10 hPa), de préférence de maximum 8 mbar (8 hPa), de manière particulièrement préférée de maximum 2 mbar (2 hPa), et une température dans le deuxième séparateur de 250 à 300°C, et la masse fondue de polymère dégazée est extraite du séparateur (7).

2. Procédé suivant la revendication 1, **caractérisé en ce que** la matière fondue sortant du deuxième séparateur (7) est dès lors directement transformée en compound ou mélangée avec des adjuvants ou additifs.

3. Procédé suivant l'une des revendications 1 ou 2, **caractérisé en ce que** le polymère dégazé obtenu est transformé en granulat directement après la sortie du deuxième étage et le cas échéant le compoundage.

4. Procédé suivant l'une des revendications 1 à 3, **caractérisé en ce qu'**on utilise comme polymère un polyamide 6 ou un copolyamide du polyamide 6 d'une viscosité relative ηrel de 2,4 à 4,6, de préférence ηrel 2,5 à 3,5, de manière particulièrement préférée ηrel de 2,6 à 3,2.

5. Procédé suivant l'une des revendications 1 à 4, **caractérisé en ce qu'**on utilise comme générateur de vide pour l'élimination des composants volatils une combinaison en circuit fermé de pompe à anneau liquide (22, 22'), condenseur par injection (18, 18"), cuve à immersion (19) et pompe de circulation (20, 20'), du caprolactame liquide étant utilisé de préférence comme agent de condensation.

6. Procédé suivant la revendication 5, **caractérisé en ce qu'**un appareil à jet de vapeur (26') utilisant du caprolactame comme agent propulseur est branché en amont du condenseur par injection (18).

7. Procédé suivant la revendication 5, **caractérisé en ce qu'**une combinaison en série d'un premier appareil à jet de vapeur (26), d'un condenseur par injection (18') et d'un deuxième appareil à jet de vapeur (26') est branchée en amont du condenseur par injection (18"), le condensat au pied du deuxième condenseur par injection (18') étant envoyé dans la cuve à immersion (19), du caprolactame étant utilisé de préférence comme agent propulseur pour les appareils à jet de vapeur (26, 26').

8. Procédé suivant l'une des revendications 1 à 7, **caractérisé en ce que** le polyamide 6 ou le copolyamide du polyamide 6 contient une teneur en monomères (ε-caprolactame) de maximum 0,7 % en poids, en particulier de maximum 0,3 % en poids, de manière particulièrement préférée de maximum 0,2 % en poids, avec une teneur en dimères de maximum 0,3 % en poids, en particulier de maximum 0,2 % en poids, de préférence de maximum 0,15 % en poids.
